# EUROPÄISCHE PATENTANMELDUNG

(11) **EP 0 780 992 A1**
(43) Veröffentlichungstag der Anmeldung: **25.06.1997**
(21) Anmeldenummer: 96890198.3
(22) Anmeldetag: 19.12.1996
(51) Int. Cl.: H04B 1/38

(54) **Vorrichtung zum Anschliessen eines mobilen Telefons oder Funkgerätes an eine externe Stromversorgung**

(30) Priorität: 22.12.1995 AT 2101/95
(71) Anmelder: Nürnberger, Alfred R., 2483 Ebreichsdorf (AT)
(72) Erfinder: Nürnberger, Alfred R., 2483 Ebreichsdorf (AT)
(74) Vertreter: Matschnig, Franz, Dipl.-Ing.

(57) **Zusammenfassung**

Vorrichtung zum Anschließen eines mobilen Telefons oder Funkgerätes an eine externe Stromversorgung, insbesondere zur Verwendung in einem Kraftfahrzeug od. dgl., welche ein Mittel zur Steuerung der Ladung bzw. Stromversorgung und gegebenenfalls von bestimmten Signal- und/oder Steuer-Ein-/Ausgängen des mobilen Telefons oder Funkgerätes und ein Mittel zum Anpassen der Steuerparameter oder des Ablaufprogrammes dieser Steuerung an unterschiedliche Typen von mobilen Telefonen oder Funkgeräten aufweist. Weiters kann das Mittel zur Steuerung zusätzlich mit einer Freisprecheinrichtung für das Telefon oder Funkgerät verbunden sein und das Mittel zum Anpassen der Steuerparameter oder des Ablaufprogrammes zusätzlich einen oder mehrere Parameter oder einen Ablaufprogrammteil zur Steuerung der Freisprecheinrichtung aufweisen. Diese Vorrichtung besitzt den Vorteil, daß sie an eine eine Vielzahl verschiedener Telefon- oder Funkgerättypen angepaßt werden kann und daher universell verwendbar ist.

## Beschreibung

Die vorliegende Erfindung bezieht sich auf eine Vorrichtung zum Anschließen eines mobilen Telefons oder Funkgerätes an eine externe Stromversorgung, insbesondere zur Verwendung in einem Kraftfahrzeug od. dgl.

Vorrichtungen zum Anschließen von Mobiltelefonen oder -funkgeräten sind bekannt und werden sowohl von den Herstellern dieser Telefone und Funkgeräte als auch von Zubehörherstellern angeboten. Diese Vorrichtungen bestehen im wesentlichen aus einem Kabel mit zwei Steckern, von welchen einer an das Telefon oder Funkgerät und der andere an die Stromversorgung z.B. den Zigarettenanzünder eines Kraftfahrzeuges angesteckt wird. Einer dieser Stecker enthält üblicherweise einen Ladestromregler. Falls das Mobiltelefon oder -funkgerät mit einer Freisprecheinrichtung verwendet wird, ist die Vorrichtung zum Anschließen des Telefons oder Funkgerätes an eine Stromversorgung im allgemeinen in der Freisprecheinrichtung enthalten, welche ein Verbindungskabel mit einem Stecker für das Telefon oder das Funkgerät und ein weiteres Verbindungskabel zu der Stromversorgung aufweist.

Bei unterschiedlichen Typen von Mobiltelefonen oder -funkgeräten werden häufig unterschiedliche Steckertypen, unterschiedliche Steuersequenzen und unterschiedliche Ladeverfahren bzw. Stromversorgungen verwendet, sodaß die von den Telefon- oder Funkgeräteherstellern angebotenen Vorrichtungen untereinander nicht kompatibel sind. Dies bedeutet für den Händler und den Zubehörhersteller einen erheblichen Mehraufwand, da sie eine Vielzahl von verschiedenen Typen von Anschlußkabeln im Programm haben müssen. Das Problem verstärkt sich insbesondere bei Freisprecheinrichtungen, die erhöhte Herstellungs- und Lagerkosten verursachen. Für den Kunden ergibt sich überdies das Problem, daß er bei Anschaffung eines neuen Mobiltelefons immer auch neues Zubehör der oben genannten Art kaufen muß, da bereits vorhandenes Zubehör mit Geräten neuerer Bauart nicht kompatibel ist, oft nicht einmal bei Geräten einer gleichen Baureihe.

Aufgabe der Erfindung ist daher eine Lösung dieses unbefriedigenden Zustandes, welche sowohl für den Zubehörhersteller, den Händler als auch den Kunden Vorteile mit sich bringt. Insbesondere sollte eine kostensparende Lösung dieses Problems gefunden werden, mit welcher die Anforderungen des Marktes längerfristig befriedigt werden können.

Die Lösung des oben genannten Problems liegt erfindungsgemäß darin, daß bei einer Vorrichtung der eingangs genannten Art ein Mittel zur Steuerung der Ladung bzw. Stromversorgung und gegebenenfalls von bestimmten Signal-Ein- und/oder -Ausgängen des mobilen Telefons oder Funkgerätes und ein Mittel zum Anpassen der Steuerparameter oder des Ablaufprogrammes dieser Steuerung an unterschiedliche Typen von mobilen Telefonen oder Funkgeräten vorgesehen ist. Durch diese Lösung kann eine Anschlußvorrichtung in vorteilhafter Weise entweder durch den Hersteller, den Händler oder gegebenenfalls durch den Kunden an den jeweils gewünschten Typ eines mobilen Telefons oder Funkgerätes angepaßt werden. Da die Anpassung äußerst flexibel ist, kann eine Vorrichtung der erfindungsgemäßen Art für alle bestehenden und auch für zukünftige Telefon- oder Funkgerättypen verwendet werden, wenn die entsprechende Anpassung des Ablaufprogrammes der Steuerung an den gewünschten Telefon- oder Funkgerättyp vorgenommen wird. Für den Hersteller bedeutet dies insbesondere, daß er ohne merklichen Mehraufwand Anschlußvorrichtungen für alle am Markt befindlichen Telefontypen anbieten und die Produktreihe jederzeit an die neuen Gerättypen anpassen kann.

Bei einer bevorzugten Ausführungsform der erfindungsgemäßen Vorrichtung ist das Mittel zur Steuerung zusätzlich mit einer Freisprecheinrichtung für das Telefon oder Funkgerät verbunden und das Mittel zum Anpassen der Steuerparameter oder des Ablaufprogrammes weist zusätzlich einen oder mehrere Parameter oder einen Ablaufprogrammteil zur Steuerung der Freisprecheinrichtung auf. Bei dieser Ausführungsform tritt der obige Vorteil noch stärker in Erscheinung, da die Anschaffung einer Freisprecheinrichtung mit erheblichen Mehrkosten verbunden ist, wogegen die Anpassung der Ablaufsteuerung lediglich mit geringen Kosten verbunden ist.

Bei einer einfachen und kostengünstig herstellbaren Ausführungsform der erfindungsgemäßen Vorrichtung kann das Mittel zur Steuerung eine programmierbare oder festverdrahtete Logik und das Mittel zum Anpassen der Steuerparameter oder des Ablaufprogrammes eine Hardwarecodierung, z.B. Drahtbrücken, Steckbrücken, Schalter, Dioden etc. aufweisen, wogegen bei einer bei einer besonders vielseitig anpaßbaren Ausführungsform der erfindungsgemäßen Vorrichtung das Mittel zur Steuerung einen programmierbaren Mikrocontroller und das Mittel zum Anpassen der Steuerparameter oder des Ablaufprogrammes zumindest einen Datenspeicher, z.B. ROM, EPROM, EEPROM etc. aufweisen.

Bei einer Ausführungsvariante der oben genannten, besonders vielseitig anpaßbaren Ausführungsform kann der zumindest eine Datenspeicher mittels eines externen Programmiergerätes oder Computers mit den Parametern oder dem Ablaufprogramm eines gewünschten Telefon- oder Funkgerättyps ladbar sein. Dadurch kann auch der Händler, der ein Programmiergerät besitzt, unabhängig vom Zubehörhersteller eine Anpassung des Ablaufprogrammes an einen gewünschten Telefon- oder Funkgerättyp vornehmen.

Alternativ dazu kann der Datenspeicher auswechselbar sein, sodaß sowohl der Händler als auch der Kunde eine entsprechende Anpassung der Anschlußvorrichtung oder der Freisprecheinrichtung vornehmen können.

Bei einer in der Praxis besonders vorteilhaften Ausführungsform der erfindungsgemäßen Vorrichtung besteht diese aus zumindest zwei physikalischen Teilen, nämlich einem das Mittel zum Steuern enthaltenden Steuerungsteil, der an die Stromversorgung anschließbar ist, und einem das Mittel zum Anpassen der Steuerparameter oder des Ablaufprogrammes enthaltender Anpassungsteil, der mit dem Telefon oder Funkgerät verbindbar ist, wobei die zwei Teile über eine Steckverbindung lösbar miteinander verbindbar sind. Falls eine Freisprecheinrichtung verwendet werden soll, ist der Steuerungsteil in der Freisprecheinrichtung integriert, welche an die Stromversorgung anschließbar ist. Bei diesen praktischen Ausführungsvarianten wird bei einem Wechsel des Mobiltelefon- oder -funkgerätes in vorteilhafter Weise lediglich der Anpassungsteil ausgewechselt oder an die Anforderungen des neuen Gerättyps angepaßt, wogegen der Steuerungsteil oder die Freisprecheinrichtung mit dem integrierten Steuerungsteil immer in unveränderter Form weiter verwendet werden kann.

Bei Verwendung einer Anschlußvorrichtung ohne Freisprecheinrichtung ist bei einer einfachen Ausführungsform der Steuerungsteil in einem an die Stromversorgung, z.B. einem Zigarettenanzünder eines Kraftfahrzeuges, ansteckbaren Steckerteil integriert. Dadurch ergibt sich ein einziger Bauteil, der ohne Kabel kostengünstig herstellbar ist und überdies wenig Platz verbraucht.

Eine Weiterentwicklung der erfindungsgemäßen Vorrichtung besteht darin, daß der Steuerungsteil über einen Adapterteil mit dem Anpassungsteil verbindbar ist, und der Adapterteil bestimmte Signal-Ein- und -Ausgänge für eine Freisprecheinrichtung oder für Datenleitungen aufweist, wobei der Adapterteil seinerseits ein Mittel zum Anpassen der Steuerparameter oder des Ablaufprogrammes in Form zumindest eines Datenspeichers aufweist. Durch diesen Adapterteil wird die besondere Vielseitigkeit des Systems weiter verbessert, da die erfindungsgemäße Vorrichtung exakt an die Wünsche des Kunden und sein Gerät angepaßt werden kann.

Im Sinne einer größtmöglichen Vielseitigkeit für den Kunden ist es wünschenswert, wenn der Anpassungsteil einen passenden Stecker für den gewünschten Telefon- oder Funkgerättyp und einen weiteren Stecker für die Steckverbindung zu dem Steuerungsteil aufweist und die zwei Stecker des Anpassungsteils über ein Verbindungskabel miteinander verbunden sind, wobei das Mittel zum Anpassen in jenem Stecker untergebracht ist, der dem Steuerungsteil zugeordnet ist.

Bei einer bevorzugten Ausführungsform mit einem programmierbaren Mikrocontroller mit einem Datenspeicher ergeben sich einige besonders vorteilhafte Ausführungsformen, nämlich eine erste, welche zumindest einen Datenspeicher für eine Mehrzahl von Ablaufprogrammen aufweist, von welchen zur Steuerung ein für den gewünschten Telefon- oder Funkgerättyp geeignetes Ablaufprogramm durch das Mittel zum Anpassen ausgewählt wird, eine zweite, welche zumindest einen Datenspeicher für ein einziges, für den gewünschten Telefon- oder Funkgerättyp geeignetes Ablaufprogramm aufweist, welches durch das Mittel zum Anpassen bereitgestellt wird und eine dritte, welche zumindest einen Datenspeicher für ein für verschiedene Telefon- und Funkgerättypen universell verwendbares Ablaufprogramm und zumindest einen Parameterspeicher für entsprechende Parameter für den gewünschten Telefon- oder Funkgerättyp aufweist, wobei die Parameter zur Anpassung des universellen Ablaufprogrammes an den gewünschten Telefon- oder Funkgerättyp geeignet sind und durch das Mittel zum Anpassen bereitgestellt werden.

Im folgenden wird die vorliegende Erfindung anhand mehrerer nicht einschränkender Ausführungsbeispiele für ein Mobiltelefon mit Bezug auf die beiliegenden Figuren näher erläutert, die zeigen:
Fig. 1 ein schematisches Blockschaltbild eines ersten Ausführungsbeispiels einer erfindungsgemäßen Vorrichtung,
Fig. 2 ein schematisches Blockschaltbild eines zweiten Ausführungsbeispiels einer erfindungsgemäßen Vorrichtung,
Fig. 3 ein schematisches Blockschaltbild eines dritten Ausführungsbeispiels einer erfindungsgemäßen Vorrichtung,
Fig. 4 ein schematisches Blockschaltbild eines vierten Ausführungsbeispiels einer erfindungsgemäßen Vorrichtung,
Figs. 5, 6 und 7 schematische Darstellungen der Speicherkonfiguration für verschiedene Ausführungsvarianten mit einem programmierbaren Mikrocontroller,
Fig. 8 eine schematische Darstellung eines Steuerungsteils mit einer Freisprecheinrichtung für eine erfindungsgemäße Vorrichtung,
Fig. 9 eine schematische Darstellung eines Anpassungsteils für eine erfindungsgemäße Vorrichtung,
Fig. 10 eine schematische Darstellung eines Adapterteils für eine erfindungsgemäße Vorrichtung und
Fig. 11 eine schematische Darstellung eines Steuerungsteils für eine erfindungsgemäße Vorrichtung.

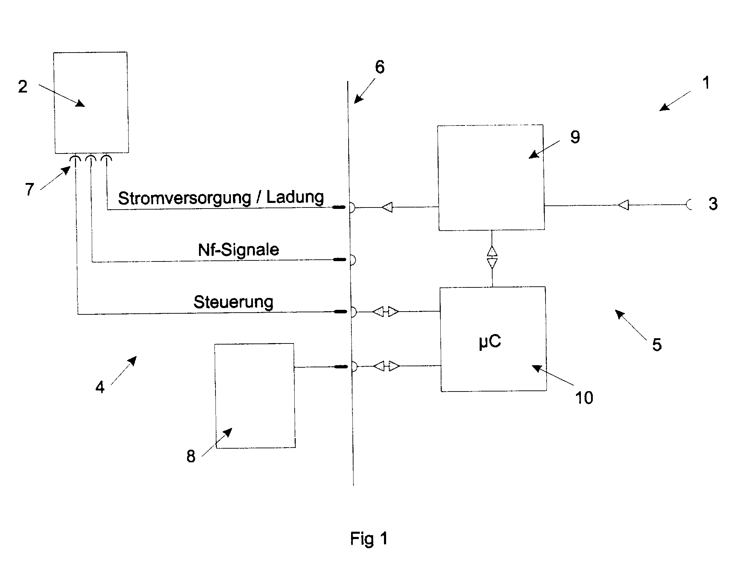

Im folgenden wird auf die Figur 1 Bezug genommen, die ein erstes Ausführungsbeispiel der erfindungsgemäßen Vorrichtung 1 zeigt, mittels welcher ein Mobiltelefon 2 an eine nicht näher dargestellte externe Stromversorgung 3, z.B. die eines Kraftfahrzeuges, angeschlossen werden kann. Die Vorrichtung 1 besteht aus einem Anpassungsteil 4 und einem Steuerungsteil 5, die im vorliegenden Fall mittels einer nicht näher dargestellten Steckverbindung 6 miteinander verbindbar sind. Der Anpassungsteil 4 enthält die erforderlichen, in einem Verbindungskabel untergebrachten Verbindungsleitungen von der Steckverbindung 6 zu dem Mobiltelefon 2, an welchem das Verbindungskabel des Anpassungsteils 4 mittels eines geeigneten gerätespezifischen Steckers 7 angesteckt werden kann. Bei dem gezeigten Ausführungsbeispiel sind in dem Verbindungskabel folgende Leitungen vorgesehen: eine Leitung für die Stromversorgung bzw. Ladung des Mobiltelefons, eine weitere Leitung für das Nf-Audiosignal und eine Steuerleitung. Weiters umfaßt der Anpassungsteil 4 bei dem vorliegenden Ausführungsbeispiel einen Speicher 8, z.B. ein ROM, EPROM oder EEPROM, in welchem die für eine Anpassung der Stromversorgung 3 an den Typ des verwendeten Telefons 2 erforderlichen Daten abgespeichert sind. Wie weiter unten noch erläutert wird, können in dem Speicher 8 beispielsweise das gesamte Ablaufprogramm der Steuerung, die für das Ablaufprogramm erforderlichen Geräteparameter oder eine Angabe des Telefontyps abgespeichert sein. Der Speicher 4 ist ebenso über die Steckverbindung 6 mit dem Steuerungsteil 5 verbunden. Gegebenenfalls kann der Speicher 8 auswechselbar oder durch ein Programmiergerät beschreibbar sein, sodaß der Anpassungsteil jederzeit, d.h. sowohl vom Zubehörhersteller als auch vom Händler und/oder Kunden an den gewünschten Gerättyp des Telefons angepaßt werden kann. Anstelle des Speichers 8 kann bei einem hier nicht dargestellten Ausführungsbeispiel in dem Anpassungsteil 4 auch eine Hardwarecodierung, z.B. Drahtbrücken, Steckbrücken, Dioden od. dgl. vorgesehen sein, welche Auskunft über den Gerättyp des Telefons 2 oder Steuerparameter des für ein solches Telefon 2 geeigneten Ablaufprogrammes geben können.

Der Steuerungsteil 5 weist einen mit der Stromversorgung verbindbaren Laderegler 9 auf, der über die Steckverbindung 6 an die Stromversorgungs-/Ladungsleitung des Verbindungskabels angeschlossen wird. Weiters ist bei dem gezeigten Ausführungsbeispiel in dem Steuerungsteil 5 der Vorrichtung 1 ein Mikrocontroller 10 vorgesehen, der einerseits eine Steuerung des Ladereglers 9 vornimmt und andererseits mit der Steuerleitung und dem Speicher 8 des Anpassungsteils 4 verbunden ist, um aus dem Speicher die nötigen Informationen für die Anpassung des Ablaufprogramms an den Telefontyp zu erhalten und um Steuersignale an das Mobiltelefon zu senden oder von diesem zu empfangen, wie z.B. Ein-/Ausschalten des Telefons, Umschalten auf externe Stromversorgung etc.

Der Mikrocontroller 10 kann ein frei programmierbarer Mikroprozessor bekannter Art, der gegebenenfalls mit der erforderlichen Peripherie (Speicher, UART, A/D-Wandler) ausgestattet ist, oder eine programmierbare oder fest verdrahtete Logik einer Ablaufsteuerung sein, wie z.B. ASIC (Application Specific Integrated Circuit), PAL (Programmable Array Logic), PLD (Programmable Logic Array) oder GAL (Gated Array Logic).

Die Funktion der erfindungsgemäßen Vorrichtung von Figur 1 ist im wesentlichen die folgende: Sobald der Steuerungsteil 5 an die Stromversorgung 3 und der Anpassungsteil 4 an den Steuerungsteil 5 und das Telefon 2 angeschlossen sind, kann der Mikrocontroller 10 durch Starten seines Systemprogrammes gebooted werden, wobei die in dem Speicher 8 verfügbare Information über den angeschlossenen Telefontyp abgerufen wird. Diese Information kann beispielsweise eine für den Prozessor erkennbare Typenbezeichnung, eine Information über Steuerparameter des Ablaufprogrammes für den angeschlossenen Telefontyp (entweder die Parameter selbst oder ein Zeiger auf diese Parameter) oder das gesamte Ablaufprogramm für das angeschlossene Telefon (in Maschinencode, einem Zwischencode oder einer Programmiersprache, gegebenenfalls auch verschlüsselt). Sodann wird das gerätespezifische Ablaufprogramm oder das universelle Ablaufprogramm mit den korrekten Steuerparametern in den Mikrocontroller geladen und ausgeführt. Das Ablaufprogramm kann aber auch direkt aus dem Speicher 8 abgearbeitet werden, falls es dort in geeigneter Form vorliegt. Die konkreten Programmschritte des Ablaufprogrammes sind von Gerät zu Gerät etwas unterschiedlich, wesentliche Aufgaben des Ablaufprogrammes sind jedoch das Umschalten auf externe Stromversorgung, die ständige Stromversorgung des Telefons bzw. Ladung der Akkus, gegebenenfalls das Ein- und Ausschalten des Telefons und dgl.

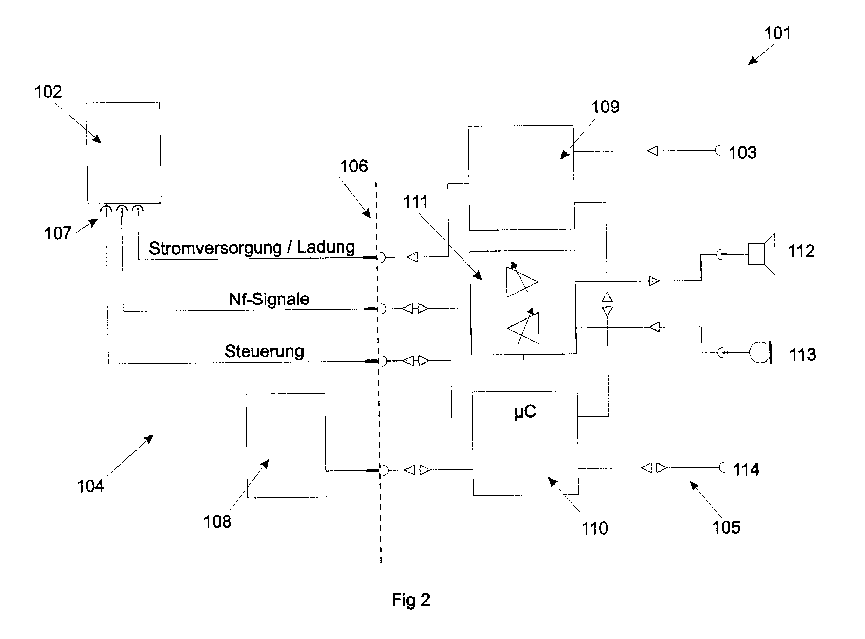

In Figur 2 ist ein zweites Ausführungsbeispiel für eine erfindungsgemäße Vorrichtung 101 dargestellt, bei welcher zusätzlich eine Freisprecheinrichtung vorgesehen ist. Für die bereits oben beschriebenen Merkmale dieser Vorrichtung werden in der folgenden Beschreibung Bezugszeichen verwendet, die gegenüber jenen der Figur 1 um 100 erhöht sind.

Auch die Vorrichtung 101 dient grundsätzlich zum Anschließen eines Mobiltelefones 102 an eine externe Stromversorgung 103 und weist zwei Teile auf, nämlich einen Anpassungsteil 104 und einen Steuerungsteil 105, die mittels einer Steckverbindung 106 miteinander verbindbar sind. Weiters ist der Anpassungsteil 104 mittels eines gerätespezifischen Steckers 107 an das Telefon 102 anschließbar.

Der Anpassungsteil 104 kann bei dem Ausführungsbeispiel gleich aufgebaut sein wie jener der Figur 1, unterscheidet sich jedoch durch den Inhalt des Speichers 108, in welchem bei diesem Ausführungsbeispiel nun auch eine Information zur Steuerung der vorhandenen Freisprecheinrichtung enthalten ist.

Der Steuerungsteil 105 dieser Vorrichtung 101 enthält die bereits weiter oben beschriebenen handelsüblichen Bauteile, nämlich einen Laderegler 109 und einen Mikrocontroller 110. Zusätzlich ist in dem Steuerungsteil 105 eine Schaltung 111 für eine Freisprecheinrichtung mit einem Lautsprecher 112 und einem Mikrofon 113 vorgesehen, die in der Freisprecheinrichtung integriert sind oder über Stecker an die Freisprecheinrichtung ansteckbar sind. Gegebenenfalls können auch beide Möglichkeiten vorgesehen sein. Freisprecheinrichtungen bzw. Schaltungen dieser Art sind dem Fachmann bekannt und werden im folgenden nicht näher erläutert.

Der Ein-/Ausgang der Freisprechschaltung 111 ist über die Steckverbindung 106 an die Nf-Audio-Signalleitung des Anpassungsteils 104 anschließbar. Weiters ist die Schaltung 111 mit dem Mikrocontroller 110 des Steuerungsteils 105 verbunden.

Zusätzlich zu der Steuerung des Ladereglers 109 übernimmt der Mikrocontroller 110 bei diesem Ausführungsbeispiel auch die Steuerung der Freisprecheinrichtung 111. Wie in Figur 2 zu sehen ist, kann der Mikrocontroller 110 einen oder mehrere weitere Daten- oder Signal-Ein-/Ausgänge 114 aufweisen, über welche Daten oder Signale an das Mobiltelefon gesendet oder von diesem empfangen werden können, z.B. zur Datenfernübertragung per FAX oder Modem. Die an diesen Leitungen 114 angelegten Signale oder Daten werden durch den Mikrocontroller 110 in eine geeignete Form gebracht und über die Steuerleitung oder eine (nicht dargestellte) Datenleitung des Verbindungskabels an das Mobiltelefon 102 weitergeleitet.

Die Funktion des Ausführungsbeispiels von Figur 2 ist ähnlich jenem der Figur 1 und wird im folgenden nur noch kurz erläutert. Nach Einschalten der Stromversorgung 103 und Anschließen des Mobiltelefons 102 an die erfindungsgemäße Vorrichtung 101 kann der Mikrocontroller 110 auf die gerätespezifischen Daten des Speichers 108 zugreifen und alle für den Betrieb der Freisprecheinrichtung 111 und den Laderegler 109 erforderlichen Maßnahmen treffen. Zusätzlich zu den bereits oben in Verbindung mit Fig. 1 erwähnten Steuerungstätigkeiten des Mikrocontrollers gehört bei diesem Ausführungsbeispiel insbesondere das Umschalten des Mobiltelefons 102 auf Freisprechbetrieb.

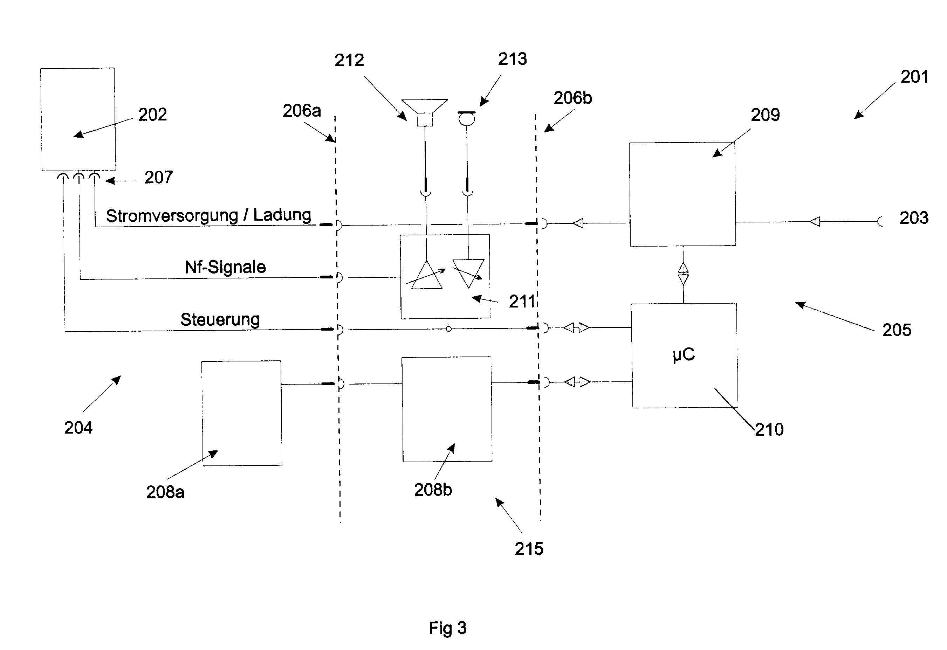

In Figur 3 ist ein weiteres Ausführungsbeispiel einer erfindungsgemäßen Vorrichtung 201 dargestellt, bei welchem bereits oben beschriebene Merkmale mit Bezugszeichen versehen sind, die um weitere 100 erhöht sind.

Die erfindungsgemäße Vorrichtung 201 dient wiederum grundsätzlich zum Anschließen eines Mobiltelefons 202 an eine externe Stromversorgung 203, weist jedoch zusätzlich zu dem Anpassungsteil 204 und dem Steuerungsteil 205 einen Adapterteil 215 auf.

Der Anpassungsteil 204 umfaßt ein Verbindungskabel mit einem gerätespezifischen Stecker 207 und einem Speicher 208a mit den Geräteparametern des angeschlossenen Telefons 202 und ist gleich aufgebaut wie bei den Ausführungsbeispielen der Figuren 1 und 2. Der Steuerungsteil 205 umfaßt einen Laderegler 209 und einen Mikrocontroller 210 und ist gleich aufgebaut wie bei dem Ausführungsbeispiel der Figur 1.

Anstelle der Steckverbindung zwischen dem Anpassungs- und Steuerungsteil 204, 205 ist bei dem in Figur 3 dargestellten Ausführungsbeispiel ein Adapterteil 215 für eine Freisprecheinrichtung vorgesehen, der mittels je einer Steckverbindung 206a, 206b zwischen dem Anpassungs- und dem Steuerungsteil 204, 205 eingefügt werden kann. Die Steckverbindungen 206a, 206b sind identisch, sodaß die Vorrichtung 201 auch ohne Adapterteil 215, nämlich als Stromversorgungs- und/oder Ladegerät betrieben werden kann (vgl. Fig. 1). Die Kontakte der Steckverbindung 206a für die Stromversorgungsleitung und die Steuerleitung des Verbindungskabels sind direkt mit den zugeordneten Kontakten der Steckverbindung 206b verbunden, sodaß eine Brücke von der Stromversorgungsleitung des Anpassungsteils 204 zum Laderegler 209 des Steuerungsteils 205 und eine Brücke zwischen der Steuerleitung des Anpassungsteils 204 zum Steuer-Ein-/Ausgang des Mikrocontrollers 210 des Steuerungsteils 205 geschaffen wird.

In dem Adapterteil 215 ist ein weiterer Speicher 208b enthalten, der entweder für sich alleine oder zusammen mit dem Speicher 208a des Anpassungsteils 204 dem Mikrocontroller 210 die nötigen Geräteparameter des angeschlossenen Telefons 202 übermittelt. Weiters ist in dem Adapterteil 215 eine Schaltung 211 für eine Freisprecheinrichtung vorgesehen, die über die Steckverbindung 206a mit der Nf-Signalleitung des Anpassungsteils 204 verbunden ist und weiters einen Ausgang für einen externen Lautsprecher 212 und einen Eingang für ein externes Mikrofon 213 aufweist. Mittels der bereits genannten Steuerleitung oder mittels einer separaten Steuerleitung ist die Schaltung der Freisprecheinrichtung 211 weiters über die Steckverbindung 206b mit dem Steuereingang des Mikrocontrollers 210 verbunden, sodaß eine Steuerung der Freisprecheinrichtung 211 des Adapterteils 215 durch den Mikrocontroller 210 des Steuerungsteils 205 möglich ist.

Die Funktion dieses Ausführungsbeispiels entspricht ohne Adapterteil 215 jener des Ausführungsbeispiels nach Figur 1 und mit Adapterteil jener des Ausführungsbeispiels nach Figur 2 und wird daher an dieser Stelle nicht nochmals erläutert. Ein wesentlicher Vorteil dieser Ausführungsform liegt darin, daß die erfindungsgemäße Vorrichtung wahlweise entweder nur als Lade/Stromversorgungsgerät (ohne Adapterteil, vgl. Fig. 1) oder als Freisprecheinrichtung (mit Adapterteil) betrieben werden kann und somit die Funktion der Ausführungsbeispiele der Figuren 1 und 2 miteinander vereint.

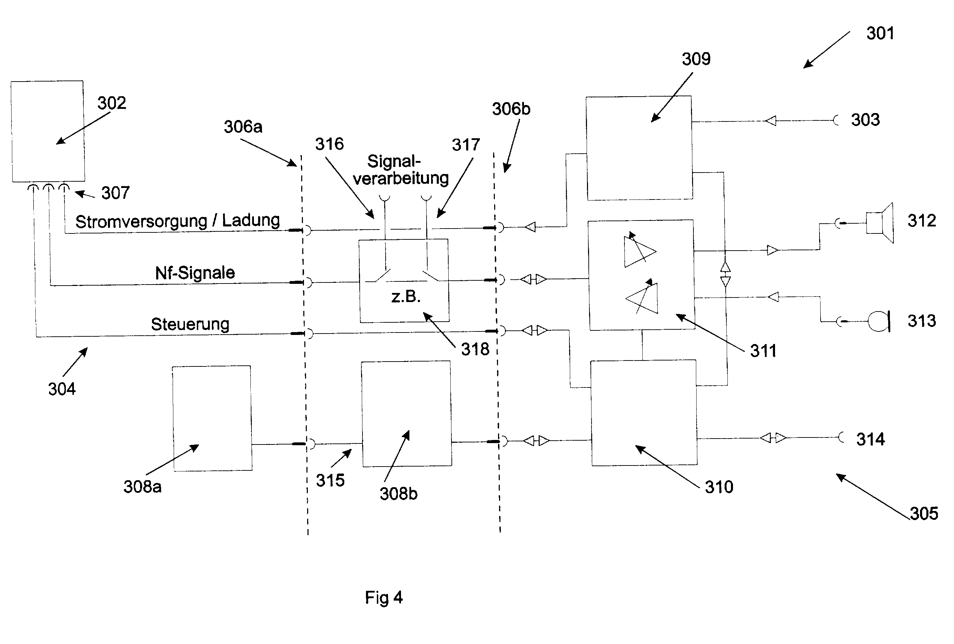

In Figur 4 ist ein weiteres Ausführungsbeispiel einer erfindungsgemäßen Vorrichtung 301 dargestellt, bei welcher ein weiterer Adapterteil 315 mit Signal- bzw. Daten Ein- und Ausgängen vorgesehen ist.

Die erfindungsgemäße Vorrichtung 301 dient wiederum grundsätzlich zum Anschließen eines Mobiltelefons 302 an eine externe Stromversorgung 303, weist jedoch zusätzlich zu dem Anpassungsteil 304 und dem Steuerungsteil 305 einen Adapterteil 315 auf.

Der Anpassungsteil 304 ist im wesentlichen gleich aufgebaut wie jener von Figur 3 und umfaßt ein Verbindungskabel mit einem gerätespezifischen Stecker 307 und einen Speicher 308a mit den gerätespezifischen Parametern oder dem Ablaufprogramm des angeschlossenen Telefons 302.

Der Steuerungsteil 305 mit Fernsprecheinrichtung ist gleich aufgebaut wie bei dem Ausführungsbeispiel nach Figur 2 und umfaßt einen Laderegler 309, einen Mikrocontroller 310 und eine Schaltung für die Freisprecheinrichtung 311, sowie einen Lautsprecher 312 und ein Mikrofon 313, die in dem Gerät integriert und/oder extern an dieses anschließbar sein können.

Ebenso ist ein an den Mikrocontroller 310 gelegter externer Datenein-/-ausgang 314 vorgesehen, z.B. für einen Anrufbeantworter oder ein (digitales) FAX bzw. Modem.

Anstelle der Steckverbindung zwischen dem Anpassungs- und Steuerungsteil 304, 305 ist auch bei dem in Figur 4 dargestellten Ausführungsbeispiel ein Adapterteil 315 vorgesehen, der jedoch für eine externe Signalverarbeitung bestimmt ist und daher Signal-Ein- und -Ausgänge 316, 317 aufweist. Der Adapterteil 315 kann mittels je einer Steckverbindung 306a, 306b zwischen dem Anpassungs- und dem Steuerungsteil 304, 305 eingefügt werden, wobei diese Steckverbindungen 306a, 306b identisch sind, sodaß die Vorrichtung 301 auch ohne Adapterteil 315, nämlich als Freisprecheinrichtung mit einem Stromversorgungs- und/oder Ladegerät betrieben werden kann (vgl. Fig. 2). Die Kontakte der Steckverbindung 306a für die Stromversorgungsleitung und für die Steuerleitung zu dem Mobiltelefon 302 sind mit den zugeordneten Kontakten der Steckverbindung 306b überbrückt, sodaß eine direkte Verbindung der Stromversorgungsleitung des Anpassungsteils 304 zum Laderegler 309 des Steuerungsteils 305 und eine direkte Verbindung der Steuerleitung des Anpassungsteils 304 zum Steuer-Ein/Ausgang des Mikrocontrollers 310 des Steuerungsteils 305 geschaffen wird.

Auch in dem Adapterteil 315 ist ein weiterer Speicher 308b enthalten, der entweder für sich alleine oder zusammen mit dem Speicher 308a des Anpassungsteils 304 dem Mikrocontroller 310 die nötigen Geräteparameter des angeschlossenen Telefons 302 übermittelt. Weiters ist in dem Adapterteil 315 ein Umschalter 318 für eine externe Signalverarbeitung vorgesehen, der über die Steckverbindung 306a mit der Nf-Signalleitung des Anpassungsteils 304 einerseits und über die Steckverbindung 306b mit dem Signal-Ein-/Ausgang der Freisprechschaltung 311 verbunden ist. Bei dem vorliegenden Ausführungsbeispiel ist der Umschalter 318 so konzipiert, daß die Nf-Signalleitung des Anpassungsteils 304 in einer Freisprechstellung auf den Ein/Ausgang der Freisprechschaltung 311 durchgeschalten wird und in einer Signalverarbeitungs-Stellung die Nf-Signalleitung des Anpassungsteils 304 auf einen ersten Ein-/Ausgang 316 des Adapterteils 315 und der zweite Ein-/Ausgang 317 des Adapterteils 315 mit dem Eingang der Freisprechschaltung 311 des Steuerungsteils 305 verbunden wird. Die Signalverarbeitungs-Funktion des Adapterteils 315 kann für verschiedene Zwecke genutzt werden, z.B. als Anrufbeantworter bzw. als (analoges) FAX oder Modem.

Der Mikrocontroller 310 ist über die Freisprecheinrichtung 311 auch mit dem Umschalter 318 verbunden, sodaß ein Umschalten und gegebenenfalls eine Steuerung der externen Signalverarbeitung über die Anschlüsse 316, 317 des Adapterteils 315 durch den Mikrocontroller 310 des Steuerungsteils 305 erfolgen kann.

Die Funktion des Ausführungsbeispiels der erfindungsgemäßen Vorrichtung nach Figur 4 ergibt sich aus der obigen Beschreibung der früheren Ausführungsbeispiele und des Adapterteils 315 und wird an dieser Stelle nicht näher erläutert.

Ein programmierbarer Mikrocontroller benötigt zum Ausführen eines Anwendungs-programmes zumindest einen Arbeitsspeicher, um sowohl die für seinen Betrieb erforderlichen Arbeitsprogramme als auch das an das verwendete Mobiltelefon angepaßte Ablaufprogramm für die Steuerungsfunktionen verarbeiten zu können. Zusätzlich zu dem Arbeitsspeicher des Mikrocontrollers kann nun ein weiterer Speicher vorgesehen sein, der entweder Auskunft über den verwendeten Telefontyp gibt, die für das zu verarbeitende Ablaufprogramm benötigten gerätespezifischen Parameter oder das gesamte zu verarbeitende Ablaufprogramm enthält. Das Ablaufprogramm kann in einem Maschinencode, einer Programmiersprache oder einem Zwischencode gespeichert sein und entweder direkt oder mittels eines Interpreters oder Compilers ausgeführt werden. Gegebenenfalls kann das Programm auch verschlüsselt sein, um die Manipulationssicherheit, insbesondere bei sicherheitskritischen Signal- und/oder Datenübermittlungen zu erhöhen.

Es ist verständlich, daß sich für Speicherkonfigurationen eine Vielzahl von möglichen Ausführungsformen ergibt, von welchen im folgenden anhand der beiliegenden Figuren nur einige nicht einschränkende Beispiele beschrieben werden.

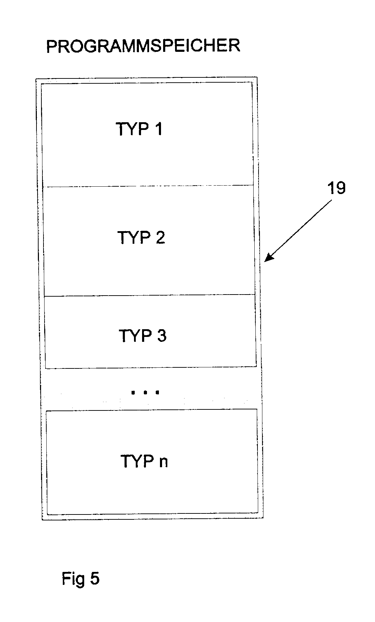

In den Figuren 5, 6 und 7 sind unterschiedliche Speicherkonfigurationen für Ausführungsbeispiele erfindungsgemäßer Vorrichtungen dargestellt.

Figur 5 zeigt eine schematische Darstellung eines geeigneten Programmspeichers 19, in welchem eine größtmögliche Anzahl verschiedener Ablaufprogramme Typ 1, Typ 2 Typ n für je einen Gerättyp gespeichert sind. Dieser Datenspeicher ist entweder mit einer (nicht dargestellten) Hardwarecodierung oder einem weiteren (nicht dargestellten) Speicher des Anpassungsteils gekoppelt, anhand welcher bzw. welchem dem Mikrocontroller angezeigt wird, welches Gerät angeschlossen und gesteuert werden soll bzw. welches der Ablaufprogramme Typ 1, Typ 2 Typ n für das angeschlosse Telefon geeignet und durch den Mikrocontroller zu verarbeiten ist. Der Programmspeicher ist vorzugsweise in dem Steuerungsteil der Vorrichtung untergebracht, wogegen die Hardwarecodierung oder der weitere Speicher in dem Anpassungsteil der Vorrichtung untergebracht sind. Beim Hochstarten des Mikrocontrollers wird sodann das richtige Programm in den Arbeitsspeicher des Mikrocontrollers geladen und abgearbeitet.

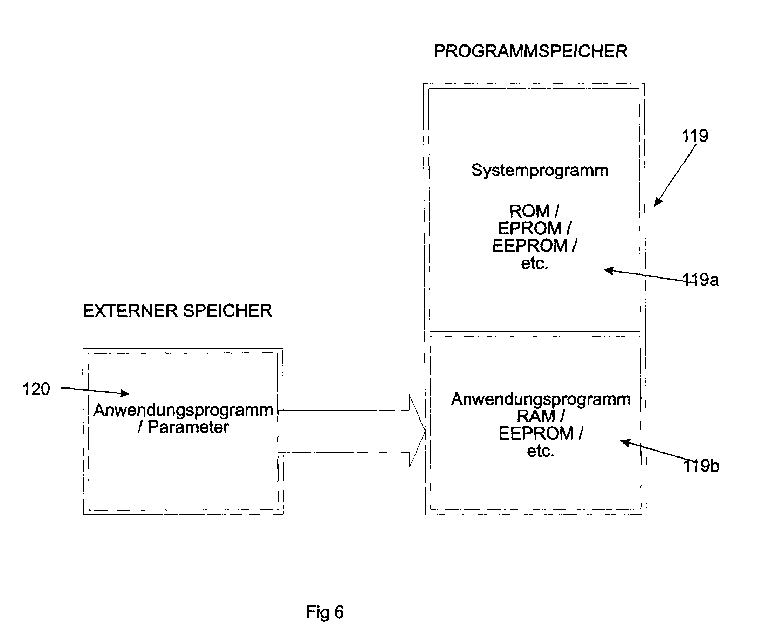

Figur 6 zeigt eine schematische Darstellung eines Programmspeichers 119 für den Steuerungsteil, der in zwei Abschnitte unterteilt ist, nämlich einen ersten Speicherabschnitt 119a, in welchem die Systemprogramme des Mikrocontrollers abgespeichert sind, z.B. ein ROM, EPROM oder EEPROM, und einen zweiten Speicherabschnitt 119b in welchen das Anwendungsprogramm (Ablaufsteuerung für den gewünschten Telefontyp) geladen werden kann, z.B. ein RAM oder EEPROM. Die zwei Speicherabschnitte können in einem einzelnen Baustein untergebracht sein, z.B. einem EEPROM, oder in zwei getrennten Speicherbausteinen, z.B. einem ROM und einem RAM. Zusätzlich ist in Figur 6 ein externer Speicher 120 des Anpassungsteils dargestellt, welcher ein einzelnes, gerätespezifisches Anwendungsprogramm enthält. Beim Hochstarten des Mikrocontrollers wird das Anwendungsprogramm aus dem externen Speicher 120 in den Speicherabschnitt 119b des Programmspeichers 119 geladen und durch den Mikrocontroller abgearbeitet. Gegebenenfalls kann das Anwendungsprogramm aber auch direkt aus dem externen Speicher 120 abgearbeitet werden.

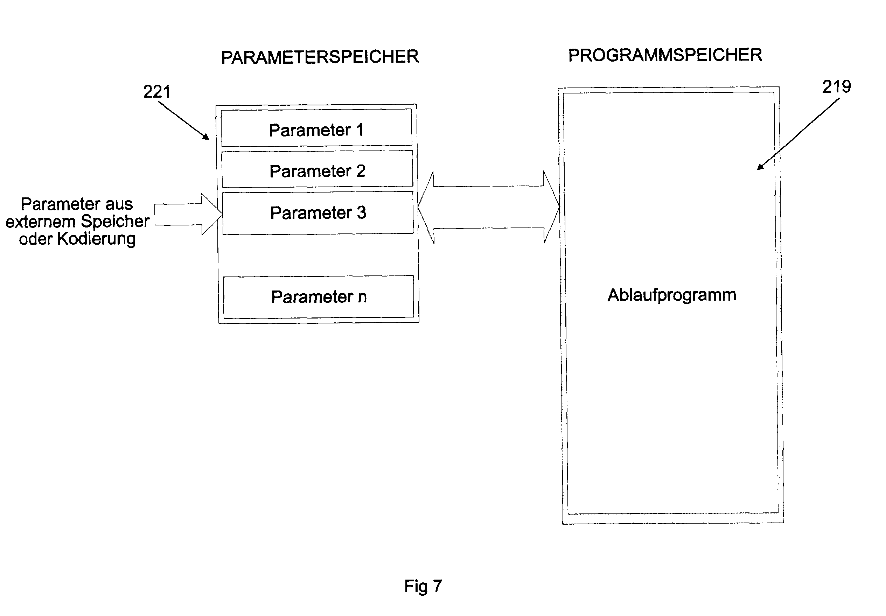

In Figur 7 ist ein weiteres Ausführungsbeispiel für eine mögliche Speicherkonfiguration dargestellt. Diese Konfiguration umfaßt einen Programmspeicher 219, in welchem ein universelles, für eine große Anzahl von Telefontypen verwendbares Ablaufprogramm abgespeichert ist, und einen Parameterspeicher 221, in welchem die gerätespezifischen Steuerparameter Parameter 1, Parameter 2, ..., Parameter n abgespeichert sind, die zur korrekten Ausführung des universellen Ablaufprogramms benötigt werden. Die erforderlichen Parameter können beim Hochstarten des Mikrocontrollers aus einer (nicht dargestellten) Harwarecodierung oder einem (nicht dargestellten) externen Speicher in den Parameterspeicher geladen werden. Üblicherweise werden nicht die Parameter selbst, sondern ein oder mehrere Zeiger (Adressen) auf die zu verwendenden Parameter des Parameterspeichers 221 geladen. Der Parameterspeicher 221 kann aber auch vor erstmaligem Verwenden der Vorrichtung mittels eines Programmiergerätes oder eines externen Computers mit den Parametern für den gewünschten Telefontyp programmierbar sein (EEPROM). Der Parameterspeicher 121 und der Programmspeicher 119 für das universelle Ablaufprogramm können auch in einem einzigen Speicherbaustein integriert sein (RAM).

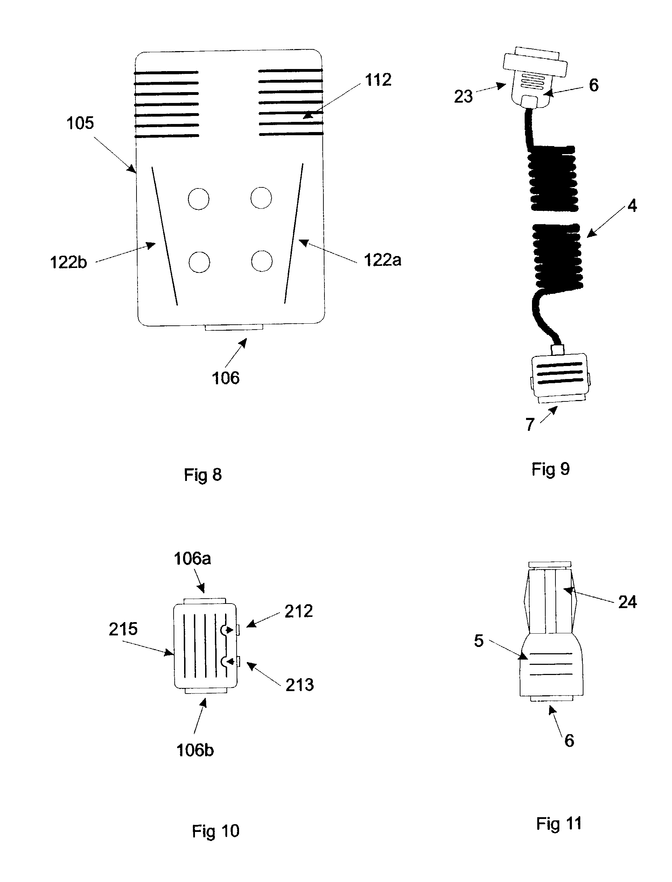

In den Figuren 8 bis 11 sind praxisgerechte Ausführungsformen für die einzelnen, oben beschriebenen Bestandteile einer erfindungsgemäßen Vorrichtung in je einer schematischen Draufsicht dargestellt.

Figur 8 zeigt eine Freisprechbox für den Steuerungsteil 105 mit einer Fernsprecheinrichtung, die beispielsweise in der Figur 2 anhand eines schematischen Blockschaltbildes dargestellt und beschrieben ist. In Figur 8 ist weiters der Lautsprecher 112 und der dem Steuerungsteil 105 zugeordnete Abschnitt der Steckverbindung 106 zu sehen. Das Mobiltelefon kann gegebenenfalls mittels der Halterungen 122a, 122b an der Freisprechbox lösbar befestigt werden. Eine Freisprechbox mit einem Steuerungsteil und einer Fernsprecheinrichtung dieser Art kann auch bei dem Ausführungsbeispiel gemäß Figur 4 verwendet werden.

Figur 9 zeigt den Anpassungsteil 4 für eine erfindungsgemäße Vorrichtung gemäß Figur 1, das sogenannte Systemkabel, mit einem Stecker 7 für das Mobiltelefon und einem weiteren Stecker 23, welcher den dem Anpassungsteil zugeordneten Abschnitt der Steckverbindung 6 bildet (vgl. Fig. 1). Die beiden Stecker 7 und 23 sind über ein Verbindungskabel miteinander verbunden, welches die oben beschriebenen Leitungen für die Stromversorgung/Ladung, die Nf-Signale und eine Steuerleitung enthält. In dem Stecker 23 ist in vorteilhafter Weise der Speicher 8 des Anpassungsteils 4 untergebracht. Ein Anpassungsteil dieser Art kann auch bei den Ausführungsbeispielen der Figuren 2 bis 4 verwendet werden.

Figur 10 zeigt den Adapterteil 215 mit Fernsprechschaltung gemäß Figur 3 mit den diesem Teil zugeordneten Abschnitten der Steckverbindungen 106a, 106b. Weiters sind der Ausgang für den Lautsprecher 112 und der Eingang für das Mikrofon 113 zu sehen. Ein Adapterteil dieser Art kann auch bei dem Ausführungsbeispiel nach Figur 4 verwendet werden, wobei jedoch anstelle der Freisprechschaltung ein Umschalter vorgesehen ist und die Ein-/Ausgänge für eine externe Signalverarbeitung verwendet werden.

In Figur 11 ist der Steuerungsteil 5 gemäß Figur 1 in Form eines Ladesteckers 24 für den Zigarettenanzünder eines Kraftfahrzeuges dargestellt. An dem dem Stecker 24 abgewandten Ende des Steuerungsteils 5 ist der diesem Teil zugeordnete Abschnitt der Steckverbindung 6 zu sehen. Ein Steuerungsteil dieser Art kann auch bei dem Ausführungsbeispiel nach Figur 3 verwendet werden.

Anhand der Figuren 8 bis 11 ist leicht zu sehen, daß die vorliegende Erfindung zusätzlich zu der hohen Flexibilität bei der Anpassung an verschiedene Gerättypen weiters den Vorteil besitzt, daß einzelne Komponenten des Systems nahezu beliebig miteinander kombiniert werden können, um die unterschiedlichsten Einsatzmöglichkeiten eines Mobiltelefons oder -funkgerätes zu unterstützen.

Zusätzlich zu den oben beschriebenen Ausführungsbeispielen umfaßt die Erfindung aber auch eine Vielzahl weiterer möglicher Ausführungsformen. Zum Beispiel können der Speicher oder die Hardwarecodierung des Anpassungsteils und der Steuerungsteil in einem einzigen Gehäuse (Ladestecker, Freisprechbox) untergebracht und gegebenenfalls auswechselbar, fix programmiert oder über Programmiergerät ladbar sein. Demnach ist die Steckverbindung 6, 106 nicht unbedingt erforderlich. Der Anpassungs- und der Steuerungsteil können sogar in einem einzigen Bauteil, gegebenenfalls auf einer einzigen Platine oder einem einzigen Chip untergebracht sein.

Die oben beschriebenen Leitungen (Stromversorgung/Ladung, Nf-Signale, Steuerung) sind üblicherweise nicht durch eine einzelne Leitung realisiert, sondern vielfach durch eine Mehrzahl von Leitungen. Gegebenenfalls können in dem Verbindungskabel zwischen dem Steuerungsteil und dem Mobiltelefon auch ein Daten- und/oder Adreßbus vorgesehen sein, um komplexe Datenübertragungen mit größtmöglicher Geschwindigkeit und Datensicherheit zu realisieren.

## Patentansprüche

1. Vorrichtung zum Anschließen eines mobilen Telefons oder Funkgerätes an eine externe Stromversorgung, insbesondere zur Verwendung in einem Kraftfahrzeug od. dgl., **dadurch gekennzeichnet, daß** sie ein Mittel zur Steuerung der Ladung bzw. Stromversorgung und gegebenenfalls von bestimmten Signal- und/oder Steuer-Ein-/Ausgängen des mobilen Telefons oder Funkgerätes und ein Mittel zum Anpassen der Steuerparameter oder des Ablaufprogrammes dieser Steuerung an unterschiedliche Typen von mobilen Telefonen oder Funkgeräten aufweist.

2. Vorrichtung nach Anspruch 1, **dadurch gekennzeichnet, daß** das Mittel zur Steuerung zusätzlich mit einer Freisprecheinrichtung für das Telefon oder Funkgerät verbunden ist und das Mittel zum Anpassen der Steuerparameter oder des Ablaufprogrammes zusätzlich einen oder mehrere Parameter oder einen Ablaufprogrammteil zur Steuerung der Freisprecheinrichtung aufweist.

3. Vorrichtung nach Anspruch 1 oder 2, **dadurch gekennzeichnet, daß** das Mittel zur Steuerung eine programmierbare oder festverdrahtete Logik und das Mittel zum Anpassen der Steuerparameter oder des Ablaufprogrammes eine Hardwarecodierung, z.B. Drahtbrücken, Steckbrücken, Schalter, Dioden etc. aufweist.

4. Vorrichtung nach Anspruch 1 oder 2, **dadurch gekennzeichnet, daß** das Mittel zur Steuerung einen programmierbaren Microcontroller und das Mittel zum Anpassen der Steuerparameter oder des Ablaufprogrammes zumindest einen Datenspeicher, z.B. ROM, EPROM, EEPROM etc. aufweist.

5. Vorrichtung nach Anspruch 4, **dadurch gekennzeichnet, daß** der zumindest eine Datenspeicher des Anpassungsteils mittels eines externen Programmiergerätes oder Computers mit den Parametern oder dem Ablaufprogramm eines gewünschten Telefon- oder Funkgerättyps ladbar ist.

6. Vorrichtung nach Anspruch 4, **dadurch gekennzeichnet, daß** der Datenspeicher des Anpassungsteils auswechselbar ist.

7. Vorrichtung nach einem der Ansprüche 1 bis 6, **dadurch gekennzeichnet, daß** sie aus zumindest zwei physikalischen Teilen besteht, nämlich einem das Mittel zum Steuern enthaltenden Steuerungsteil, der an die Stromversorgung anschließbar ist, und einem das Mittel zum Anpassen der Steuerparameter oder des Ablaufprogrammes enthaltender Anpassungsteil, der mit dem Telefon oder Funkgerät verbindbar ist, wobei die zwei Teile über eine Steckverbindung lösbar miteinander verbindbar sind.

8. Vorrichtung nach Anspruch 2 und Anspruch 7, **dadurch gekennzeichnet, daß** der Steuerungsteil in einer Freisprecheinrichtung integriert ist, welche an die Stromversorgung anschließbar ist.

9. Vorrichtung nach Anspruch 7, **dadurch gekennzeichnet, daß** der Steuerungsteil in einem an die Stromversorgung, z.B. einem Zigarettenanzünder eines Kraftfahrzeuges ansteckbaren Steckerteil integriert ist.

10. Vorrichtung nach Anspruch 2 und Anspruch 7, **dadurch gekennzeichnet, daß** der Steuerungsteil über einen Adapterteil mit dem Anpassungsteil verbindbar ist, und der Adapterteil bestimmte Signal-Ein- und -Ausgänge für eine Freisprecheinrichtung oder für Datenleitungen aufweist, wobei der Adapterteil seinerseits ein Mittel zum Anpassen der Steuerparameter oder des Ablaufprogrammes in Form zumindest eines Datenspeichers aufweist.

11. Vorrichtung nach Anspruch 7, **dadurch gekennzeichnet, daß** der Anpassungsteil einen passenden Stecker für den gewünschte Telefon- oder Funkgerättyp und einen weiteren Stecker für die Steckverbindung zu dem Steuerungsteil aufweist und die zwei Stecker des Anpassungsteils über ein Verbindungskabel miteinander verbunden sind, wobei das Mittel zum Anpassen (Hardwarecodierung oder Speicher) in jenem Stecker untergebracht ist, der dem Steuerungsteil zugeordnet ist.

12. Vorrichtung nach einem der 1 bis 11, **dadurch gekennzeichnet, daß** sie zumindest einen Datenspeicher für eine Mehrzahl von Ablaufprogrammen aufweist, von welchen zur Steuerung ein für den gewünschten Telefon- oder Funkgerättyp geeignetes Ablaufprogramm durch das Mittel zum Anpassen ausgewählt wird.

13. Vorrichtung nach einem der Ansprüche 1 bis 11, **dadurch gekennzeichnet, daß** sie zumindest einen Datenspeicher für ein einziges, für den gewünschten Telefon- oder Funkgerättyp geeignetes Ablaufprogramm aufweist, welches durch das Mittel zum Anpassen bereitgestellt wird.

14. Vorrichtung nach einem der Ansprüche 1 bis 11, **dadurch gekennzeichnet, daß** sie zumindest einen Datenspeicher für ein für verschiedene Telefon- und Funkgerättypen universell verwendbares Ablaufprogramm und zumindest einen Parameterspeicher für entsprechende Parameter aufweist, die zur Anpassung des universellen Ablaufprogrammes an den gewünschten Telefon- oder Funkgerättyp geeignet sind und durch das Mittel zum Anpassen bereitgestellt werden.
